# EUROPEAN PATENT SPECIFICATION

(11) **EP 1 508 139 B1**
(45) Date of publication and mention of the grant of the patent: **01.07.2009**
(21) Application number: 03732646.9
(22) Date of filing: 19.05.2003
(51) Int. Cl.: G11B 5/70, G11B 5/73, G11B 5/72, G11B 5/80, B41M 5/30, B41M 5/28, B32B 29/00

(54) **MULTI-LAYER SHEET PRODUCT**
MEHRSCHICHTIGES BOGENPRODUKT
PRODUIT MULTI-COUCHES

(30) Priority: 29.05.2002 GB 0212358
(43) Date of publication of application: 23.02.2005
(73) Proprietor: ARJO WIGGINS LIMITED, Southampton, Hampshire SO15 1GA (GB)
(72) Inventor: TAYLOR, David, John, 2 Chiltern View Cottages, Monks Risborough, Bucks HP27 0SS (GB); SAUNDERS, Richard, David, Windsor, Berks SL4 3JZ (GB); HOBSON, Michael, Eric, Longwick, Bucks HP27 9SE (GB)
(74) Representative: Scott, Susan Margaret
(86) International application number: PCT/GB2003/002162
(87) International publication number: WO 2003/102926

(56) References cited:
- EP-A- 0 661 169
- WO-A-01/92961
- GB-A- 1 568 510
- GB-A- 2 109 302

## Description

This invention relates to a multi-layer sheet product, one of the layers of which comprises magnetically-activatable particles in a binder matrix.

International (PCT) Patent Application No. WO 01/92961A discloses a sheet material carrying a coating containing cavities in which electrically- and/or magnetically-activatable particles are located. The thus-coated sheet material is machine-writable and -readable in a similar manner to media such as audio or video tapes, and floppy and hard disks for use in computers. The magnetically-activatable particles disclosed in WO 01/92961A are of the same general kind as used in media as just referred to, and include chromium dioxide, iron oxide, polycrystalline nickel-cobalt alloys, cobalt-chromium or cobalt-samarium alloys, or barium-ferrite. The base sheet on which the particles are coated is typically a natural or synthetic paper.

Such magnetically-activatable materials are strongly-coloured, for example dark brown, dark grey or black. As a result, papers carrying coatings of such materials have an aesthetically-unattractive appearance which does not match the excellent whiteness, opacity, printability and appearance normally expected of good quality paper products.

WPI Abstract Acc. No. 1989-244425 of JP 1176325 describes a magnetic recording paper with good printability which consists of a base paper, a magnetic recording layer formed on one side of the base paper, and a coating formed on the magnetic recording layer and made from an aqueous paint containing a white pigment. EP 661169A describes a composite ink-jet and magnetic recording sheet having a magnetic layer coated on a support sheet having defined thickness and stiffness, and also having an ink-receiving layer of amorphous silica particles in a binder. GB 1568510 describes a sheet of paper having a magnetic coating formed over its surface, and a masking coating formed over the magnetic coating.

Our experience is that it is not readily possible to mask the unattractive appearance of the magnetic layer of such products by the provision of a white-pigmented topcoat over the magnetically-activatable coating, unless very high pigment coatweights are used, for example of the order of 20 g m⁻². Even with such coatweights, the appearance of the final product may not be fully satisfactory.

WPI Abstract Acc. No. 2000-649395 of JP 2000192398 describes a wallpaper comprising sheets of paper containing iron powder kneaded with paste in between, which can be affixed to a concrete wall or to plaster board. Pictures and posters can then be affixed to the wall using magnets.

UK Patent Application No. 2109302A describes a sheet material comprising a three-layer laminate, the outer layers of the laminate being made of paper, and the middle layer of which is opaque. The middle layer may be a ferric oxide or magnetic oxide composition, and the specification states that sheet material in which a ferric oxide composite is present in the middle layer has been found to be capable of retaining magnetic images similarly to recording tape.

In order to achieve good machine-writability and -readability of products as described above, it is important that the coating of magnetically-activatable particles should be as uniform and even as possible, so that the number of particles per unit area of the sheet surface is substantially the same across the whole of the coated area of the sheet and mottling is minimized (mottling not only looks unsightly but also leads to erratic and uneven machine-writability and -readability).

The present invention seeks to solve the above-described problem of poor sheet appearance and to provide a sheet that demonstrates both good machine-writability and -readability characteristics and good whiteness, opacity and printability on both its surfaces.

Accordingly the present invention provides a magnetically-activatable sheet product comprising a pair of laminated outer sheets between which is a magnetic layer comprising magnetically-activatable particles in a binder matrix, **characterised in that** the outer sheets have sufficient opacity to mask the appearance of the magnetic layer, and at least one of the outer sheets is provided with a pigment/binder primer coat on its inward facing surface.

The invention also provides a method of storing digital magnetic data, which comprises writing digital data to a product according to the invention using a magnetic data writer. The invention also provides a method of reading digital magnetic data, which comprises writing digital data to a product according to the invention using a magnetic data writer, and subsequently reading said data using a magnetic data reader.

The outer sheets are preferably of paper, although plastic sheet materials which simulate the properties of paper (so-called "synthetic paper") can alternatively be used.

The magnetic layer may be formed by a coating (hereafter referred to as a "magnetic coating") on the inwardly facing surface of one or both of the outer sheets, or may be formulated as a laminating adhesive which is applied as or just before the two outer sheets are brought together in a laminating press or similar equipment.

The or each (one or both) outer sheet carries a pigment/binder primer coat on its inward facing surface. This enhances the masking effect, and also, crucially, improves the magnetic properties of the product. It improves the "hold out" properties of the sheet with respect to a subsequently-applied magnetic coating, thereby facilitating the application of the magnetic coating in a uniform and even manner and minimizing waste of the magnetic coating by absorption into the body of the sheet.

Conveniently, the outer sheets are substantially identical and each comprises a base sheet of natural or synthetic paper, a pigment/binder primer coat and a magnetic coating on top of the primer coat. When laminated, the magnetic coatings are in face to face contact, and together form a single central magnetic layer. Alternatively, the magnetic layer can be formed by a magnetic coating present on only one of the two outer sheets. In either case, an additional laminating binder or adhesive is normally used to secure the sheets together to form the laminate. Such a binder may be, for example, a polyvinyl alcohol, a latex, a starch or a proteinaceous binder such as a soy protein derivative. A still further possibility, as already mentioned, is for the magnetic coating to be formulated as a laminating adhesive which is applied as or just before the two outer sheets are brought together in a laminating press or similar equipment. The adhesive or binder component of such an adhesive can be as just described for a laminating adhesive not containing magnetically-activatable particles.

The primer coat on one or both of the outer sheets is typically formulated from conventional coating pigments as used in the paper industry, for example calcium carbonate (particularly precipitated calcium carbonate), kaolin or other clays (particularly calcined clays) and/or, where high opacity is required and justifies the extra cost, titanium dioxide. The binder used can be conventional, for example a latex (particularly a styrene-butadiene or acrylic latex), a starch or starch derivative, a polyvinyl alcohol and/or a soy protein derivative or other proteinaceous material. The primer coatweight is typically in the range of about 5 to 15 g m⁻², but this can vary in accordance with the masking effect desired and the basis weight of the outer sheets used (heavier base papers normally require lower primer coatweights).

The magnetic coating can be formulated from magnetically-activatable materials as already referred to, for example chromium dioxide, iron oxide, polycrystalline nickel-cobalt alloys, cobalt-chromium or cobalt-samarium alloys, or barium-ferrite, although these do not constitute a comprehensive list of suitable materials. The binder used can be selected from the same materials as disclosed above for use in the laminating adhesive, but is typically a styrene-butadiene or acrylic or other latex. The coatweight applied is typically such that up to about 10 g m⁻² of magnetically-activatable material is present, but this can be varied in accordance with the level of magnetic character required. The magnetic coating can if desired contain an extender such as calcium carbonate, which not only offers cost reduction but also helps to reduce the darkness of the magnetic layer.

The material used for the outer sheets must be such as to provide a satisfactory masking effect and desirability also a good final product appearance, and capable of being visibly written or printed upon satisfactorily, but otherwise can be chosen to suit the intended final use of the laminated sheet product. For example, the outer sheets may be of a lightweight base paper (typically about 50 g m⁻² or less), so that when laminated, the final product will not be excessively thick or heavy. Lightweight base papers of the kind conventionally used in pressure-sensitive copying paper, commonly known as "carbonless" copying paper, are particularly suitable in this context, since they are of good appearance and combine lightness with strength. Alternatively, much heavier weight sheets can be used where the final product is required to be fairly stiff, for example for use in membership cards, swipe cards, credit cards and the like. In general, an outer sheet will be regarded as having sufficient coverage/opacity to mask the appearance of the magnetic layer if the whiteness of the resulting product, measured on an Elrepho 3000 instrument with the use of UV light enhancement, is within 5 points of the original base sheet on the L scale. Preferably the whiteness approaches that of the original base sheet used to produce the product.

As well as varying the base weight of the paper, other properties such as the nature of the paper surface, may be varied. Thus the invention may be adapted in many ways to provide products across virtually the whole range of current paper specifications; it is possible for example to provide tinted papers, papers with textured surfaces, papers with smooth surfaces, coated papers for colour printing, etc..

Although it is possible to use a primer coat on each outer sheet to achieve the desired opacity, smoothness and hold-out for the outer sheets of the final laminated product, uncoated papers can be used for one of the outer sheets, for example fairly high grammage calendered pigment-loaded papers or board, and this aspect provides a preferred embodiment of the invention. The minimum acceptable grammage will depend on a variety of factors, particularly pigment content and type, but typically is around 100 g m⁻². Where the product contains only one outer sheet bearing an inward-facing primer coat, magnetic data is preferably written to and read from the side of the product carrying the primer coating.

The present invention finds particularly useful application in the field of pressure-sensitive copying papers, also known as carbonless copying papers. Various types of pressure-sensitive copying paper are known, of which the most widely used is the transfer type. A business forms set using the transfer type of pressure-sensitive copying paper comprises an upper sheet (usually known as a "CB" sheet) coated on its lower surface with microcapsules containing a solution in an oil solvent or solvent composition of at least one chromogenic material and a lower sheet (usually known as a "CF" sheet) coated on its upper surface with a colour developer composition. If more than one copy is required, one or more intermediate sheets (usually known as "CFB" sheets) are provided, each of which is coated on its lower surface with microcapsules and on its upper surface with colour developer composition. Imaging pressure exerted on the sheets by writing, typing or impact printing ruptures the microcapsules, thereby releasing and transferring chromogenic material solution on to the colour developer composition and giving rise to a chemical reaction which develops the colour of the chromogenic material and so produces a copy image. In a variant of the above-described arrangement, the solution of chromogenic material may be present as dispersed droplets in a continuous pressure-rupturable matrix instead of being contained within discrete pressure-rupturable microcapsules. In another type of pressure-sensitive copying system usually known as a self-contained or autogenous system, microcapsules and colour developing co-reactant material are coated onto the same surface of a sheet, and writing, typing or printing on a sheet placed above the thus-coated sheet causes the microcapsules to rupture and release the solution of chromogenic material, which then reacts with the colour developing material on the sheet to produce a coloured image.

Such forms are generally used in applications involving an iterative or repeated process in which various sheets are removed at various stages in the process, often with additional written information, for example a signature or date, being added to one or more sheets. Because of the nature of such processes, the ability of one or more sheets of the set to carry magnetic information as well as visible information would be a major advance, since it would reduce or eliminate the requirement for human intervention when the forms were used for such applications and/or the requirement for retention of data stored on the forms in physical, rather than electronic, form. The present invention enables such forms to be provided not only with visible written information, but also with magnetically written information. This provides major benefits in terms of paper handling and consequential lowering of costs, in numerous circumstances.

Thus, the sheet product according to the invention may comprise one or two additional coating layers, thus producing a sheet which is a pressure-sensitive copying system, or which comprises part of a pressure-sensitive copying system. For example, the sheet may comprise a CF layer, CB layer or autogenous layer via single coating. A CFB sheet could comprise CB and CF coating layers applied to opposite sides of the sheet. Thus there may be obtained a magnetically-activatable sheet product comprising a pair of laminated outer sheets at least one of which is provided with a pigment/binder primer coat on its inward facing surface, between which is a magnetic layer comprising magnetically-activatable particles in a binder matrix, the outer sheets having sufficient opacity to mask the appearance of the magnetic layer; at least one of the outer sheets being provided on its outward facing surface with a coating which comprises either microcapsules containing a solution of at least one chromogenic material, or dispersed droplets containing at least one chromogenic material in a pressure-rupturable matrix, or a colour developer composition, or both microcapsules containing at least one chromogenic material and also a colour developer. The outward facing surfaces may also be coated with microcapsules containing a solution of at least one chromogenic material, or dispersed droplets containing at least one chromogenic material in a pressure-rupturable matrix on one side of the sheet and a colour developer composition on the opposite side of the sheet. A combination of the described coatings could also be used to manufacture self-contained CB sheets and the like commonly used in the carbonless paper industry.

Pressure sensitive coatings containing microcapsules would normally but not exclusively be coated following the lamination of the outer sheets described above, to prevent premature capsule rupture and impaired carbonless image formation. Non-microcapsule containing coatings may be coated either before or after the lamination of the outer sheets described above, as pressures applied to these coatings do not influence their carbonless image forming characteristics.

A preferred example of such a product comprises a first outer sheet provided with a pigment/binder primer coat on its inward facing surface, a magnetic layer comprising magnetically-activatable particles in a binder matrix, and a second outer sheet being provided on its outward facing surface with a coating which comprises a colour developer composition. Such a sheet will provide the bottom sheet of a set of business forms; and magnetic data can be written and read onto the form from the bottom of the set.

The invention will now be illustrated by the following Examples, in which all parts and percentages are by weight unless otherwise specified, and Figures, in which Figures 1 and 2 illustrate test results obtained in the Examples, and Figures 3 to 8 illustrate products obtained in the Examples.

### Example 1

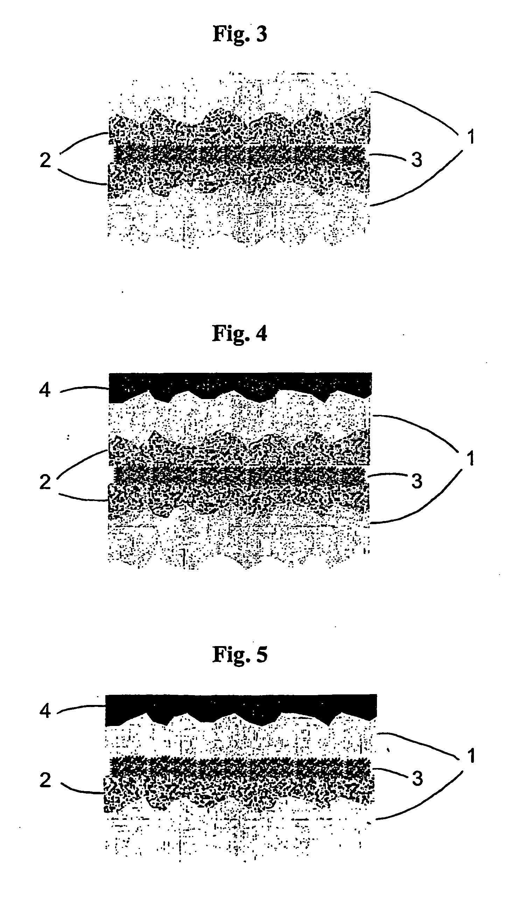

The product formed in this example is illustrated in Figure 3, in which (1) represents sheets of paper; (2) represents pigment/binder primer coats applied to the inward facing surfaces of sheets (1); and (3) represents a magnetic layer.

A 49 g m ⁻² strong lightweight base paper of the kind conventionally used in pressure-sensitive copying paper was blade coated on a large-scale pilot plant coater with a 46% solids content aqueous primer coat formulation of the following composition:

| Component | Parts by weight (dry basis) |
|---|---|
| Calcined clay | 100 |
| Oxidised potato starch | 5 |
| Styrene-butadiene latex | 15 |

The coatweight applied was about 9 g m⁻² on a dry basis, and the result was an opaque paper with a flat primer-coated surface.

The primer coated surface was then coated with a 41% solids content aqueous magnetic coating formulation using a small scale pilot plant blade coater. The coatweight applied was about 10 g m⁻² on a dry basis, and the coating formulation was as follows:

| Component | Parts by weight (dry basis) |
|---|---|
| Iron oxide | 100 |
| Styrene-butadiene latex | 17.6 |

A small-scale pilot coater/laminating press was used to laminate one ply of primer-and magnetic-coated paper as just described to a primer-coated sheet as described above but which did not carry a magnetic coating. The magnetic-coated surface faced inward, so that it formed a magnetic layer between the two paper plies. A 15% solids content aqueous solution of polyvinyl alcohol was used as a laminating adhesive and was continuously rod coated on to the magnetic coating just before the laminating nip.

The resulting product was then magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 2

This utilized two plies of the same primer-coated paper as in Example 1, but no magnetic coating was applied. Instead, a magnetically-activatable aqueous laminating adhesive formulation was applied by rod coating at a range of different application rates to one ply just before the two plies were laminated in a pilot scale laminating press as described in Example 1.

The laminating adhesive formulation had the following composition on a dry basis, and was applied at 50% solids content.

| Component | Parts by weight (dry basis) |
|---|---|
| Iron oxide | 84 |
| Calcium carbonate extender | 16 |
| Styrene-butadiene latex | 17 |

Six different application rates were applied ranging from 8 to 20 g m ⁻² on a dry basis. This gave iron oxide contents of about 1 to 3 g m⁻².

All the resulting products were magnetically imageable and readable in the same manner as described in Example 1.

### Example 3

This was a variant of Example 1 in which each of the two primer-coated plies carried a magnetic coating, rather than just one. A lower magnetic coatweight was used (5 g m⁻²), so as to give much the same total magnetic layer coatweight. The composition of the magnetic coating was as in Example 1.

### Example 4

This example demonstrates the improved opacity of pre-coated laminate compared to over-coating of white pigment.

A 49g/m² strong lightweight base of the type described in Example 1 was coated with around 10g/m² on a dry weight basis of the magnetic coating formulation described in Example 1 using a small scale pilot plant blade coater.

The magnetic coated surface was then further coated with an aqueous coating of titanium dioxide white pigment, applied using the small scale pilot blade coater. A range of titanium dioxide white pigment coatweights from 10 - 25g/m² was applied by varying the solids content of the aqueous titanium dioxide coating formulation. The coating formulation was as follows :

| Component | Parts by weight (dry basis) |
|---|---|
| Titanium dioxide | 100 |
| Styrene - butadiene latex | 18 |

The whiteness levels of sheets prepared using the above method were compared to sheets prepared using the method described in Example 1.

| Sheet construction | | Whiteness : L value measured using an Elrepho 3000* |
|---|---|---|
| Laminate - Example 1 | Side 1 | 89.45 |
| | Side 2 | 90.03 |
| 10 g/m² TiO2 | Coated side | 79.42 |
| over-coated | Base side | 86.71 |
| 25 g/m² TiO2 | Coated side | 87.04 |
| over-coated | Base side | 85.24 |

| | | |
|---|---|---|
| * higher values indicate a whiter product | | |

The tabulated results indicate that over-coating the magnetic layer with white pigment did not achieve whiteness values obtained with the laminate produced by the method employed in Example 1, even when extreme levels of the white pigment were used.

Also, the paper sheets of over-coated magnetic products demonstrated strong two-sidedness when compared to the laminates prepared using the method in Example 1. Two - sidedness is a negative aesthetic feature for printing grade papers.

### Example 5

This example demonstrates the advantage of using a pigment/binder layer to enhance magnetic waveform.

A 49g/m² strong lightweight base of the type was directly coated with around 5g/m² on a dry weight basis of the magnetic coating formulation similar to that described in Example 1 using a large-scale pilot plant coater.

A similar magnetically-coated paper was produced using a 49g/m² base which had previously been primer-coated with 9g/m² pre-coat using the formulation and methodology described in Example 1. This primer-coated base was further coated with 5g/m² on a dry weight basis of magnetic coating similar to that described in Example 1 using a large-scale pilot plant coater.

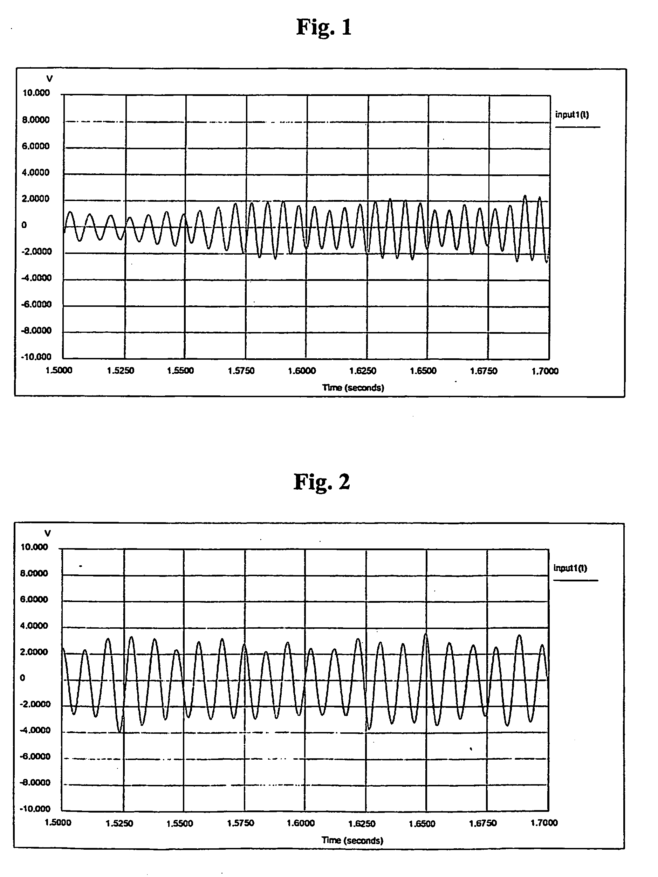

Both paper types produced above were magnetically imaged (encoded) through the base sheet with a series of zero codes using inductive magnetic writing equipment of the kind conventionally used for the encoding the magnetic strips of credit cards. The resulting magnetic images were read using a magneto-resistive reading head coupled to an oscilloscope, such that the wave patterns produced could be recorded. The results are shown in Figures 1 and 2. Figure 1 shows the waveform from the paper having a magnetic layer but no pre-coat pigment/binder layer, while Figure 2 shows the waveform from the paper having a pre-coat pigment/binder layer as well as a magnetic layer. It can clearly be observed that the primer- and magnetically coated paper produced a much more even waveform than the magnetically-only coated paper.

### Examples 6 to 8

These examples illustrate various methods for the production of a sheet of "carbonless" paper carrying a CF layer. The products formed are illustrated in Figure 4, in which (1) represents sheets of paper; (2) represents pigment/binder primer coats applied to the inward facing surfaces of sheets (1); (3) represents a magnetic layer; and (4) represents a CF layer.

### Example 6

In this example, the magnetic laminate product was converted into a carbonless CF (coated front) product via coating following the lamination process.

Magnetic laminate product, of the type described in Example 1, was coated with a 50% solids content clay based CF coating formulation using a laboratory Meyer bar rod coater to obtain a coatweight of between 5 - 10 g/m² CF on a dry weight basis. The composition of the CF coating was :

| Component | % weight (dry basis) |
|---|---|
| Silton AC/PC reactive clay | 55 |
| SPS diluent clay | 30 |
| Styrene-butadiene latex | 15 |

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 7

In this example, a carbonless CF paper was base side coated with a pigment/binder layer and a magnetic layer and the resulting primer- and magnetically-coated CF was laminated against a primer- and magnetically-coated paper (produced as described in Example 1), using a semi-industrial laminating press.

Carbonless CF paper of 46g/m² total weight was coated on the base surface with 9g/m² of pigment/binder primer coat and subsequently 5g/m² of magnetic pigment using the large-scale pilot plant coater and coating mix formulations described in Example 1.

A pilot scale laminating press was used to laminate the magnetic surface of the primer-and magnetically-coated CF against a primer- and magnetically-coated paper (as described in Example 1, except that the magnetic pigment layer was reduced to 5g/m² on a dry weight basis. The reduced coating weight was achieved by dilution of the coating mix solids content). Both sheets were used with their magnetic-coated surfaces faced inwards. A high solids content commercial adhesive (Super-Lok 260, National Starch and Adhesives Ltd.) was used as the laminating adhesive, applied at a coatweight range of 5-6g/m². Standard press conditions (speed, pressure and drying temperature) were used to generate the laminated products.

The resulting CF product was imaged using colour forming chemicals transferred onto the reactive clay coated surface from standard carbonless. CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 8

In this example, a pigment/binder primer-coated carbonless CF was laminated against a pigment/binder primer-coated paper (produced as described in Example 1), using a magnetically-activatable aqueous laminating adhesive formulation.

Carbonless CF paper of 46g/m² total weight was coated on the base surface with 9g/m² of primer coat using the large-scale pilot plant coater and coating mix formulations described in Example 1.

A laboratory scale laminating press was used to laminate the primer-coated CF to a primer-coated paper (as in Example 1) using magnetically-activatable aqueous laminating glue as described in Example 2, except that polyvinyl alcohol was substituted for styrene-butadiene latex on a weight for weight basis. Iron oxide contents of up to 5g/m² were achieved.

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 9

In this example, a standard carbonless CF was laminated against a primer-coated paper (produced as described in Example 1), using a magnetically-activatable aqueous laminating adhesive formulation. The product formed is illustrated in Figure 5, in which (1) represents sheets of paper; (2) represents a pigment/binder primer layer; (3) represents a magnetic layer; and (4) represents a CF layer.

A base weight range of standard carbonless CF papers (57, 60 and 70g/m²) were laminated with their base sides facing inwards against the primer face of a primer-coated paper using the methodology and apparatus described in Example 8.

The resulting CF product was imaged using colour forming chemicals transferred onto the reactive clay coated surface from standard carbonless CB paper, when pressure was applied to the 2 part-set in the manner usually associated with the usage of carbonless forms. A clear and legible image was obtained.

The resulting CF product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope. Better results were obtained from the base side application of magnetic image, i.e. from the side bearing the pre-coat pigment/binder layer, than from the top side application of magnetic image.

### Example 10

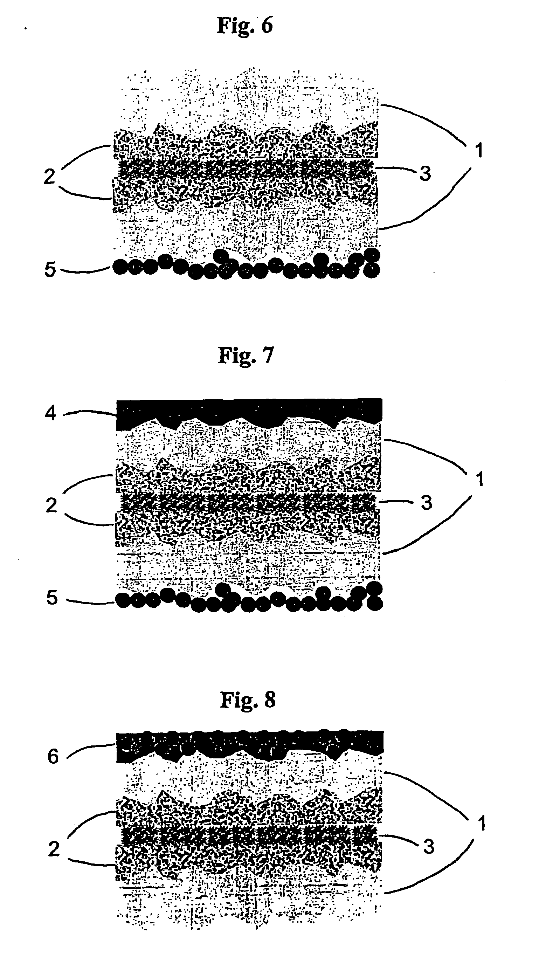

In this example, the magnetic laminate product was converted into a carbonless CB (coated back) product via coating following the lamination process. The product formed is illustrated in Figure 6, in which (1) represents sheets of paper; (2) represents pigment/binder layers; (3) represents a magnetic layer; and (5) represents a CB layer.

Magnetic laminate product, of the type described in Example 1, was coated with a 20% solids content CB coating formulation using a laboratory Meyer bar coater to obtain a coatweight of between 3-5 g/m² CB on a dry weight basis. The composition of the CB coating was :

| Component | % weight (dry basis) |
|---|---|
| CB microcapsules | 66 |
| Binder starch | 11.5 |
| Stilt starch | 22.5 |

The resulting CB product was used to image the reactive clay coated surface of standard carbonless CF paper, when pressure was applied to the 2 part-set in the manner usually associated with the usage of carbonless forms. A clear and legible image was obtained.

The resulting CB product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope.

### Example 11

In this example, a magnetic laminate CF product was converted into a carbonless CFB (coated front and back) product via coating following the lamination process. The product formed is illustrated in Figure 7, in which (1) represents sheets of paper; (2) represents pigment/binder layers; (3) represents a magnetic layer; (4) represents a CF layer; and (5) represents a CB layer.

Magnetic laminate CF product, of the type described in Example 7, was base surface coated with a 20% solids content CB coating formulation using a laboratory Meyer bar coater to obtain a coatweight of between 3-5 g/m² CB on a dry weight basis. The composition of the CB coating was :

| Component | % weight (dry basis) |
|---|---|
| CB microcapsules | 66 |
| Binder starch | 11.5 |
| Stilt starch | 22.5 |

The resulting CFB product was used to form the middle part of a 3-part carbonless set interleaved between standard carbonless CB and CF papers. The middle sheet was used to receive and transmit carbonless images when pressure was applied to the 3 part-set in the manner usually associated with the usage of carbonless forms. A clear and legible image was obtained on all parts of the set.

The resulting CFB product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope. Magnetic image could be applied onto either the base side or coated side of the paper.

### Example 12

In this example, a magnetic laminate product was converted into a carbonless self-contained or autogenous product via coating following the lamination process. The product formed is illustrated in Figure 8, in which (1) represents sheets of paper; (2) represents pigment/binder layers; (3) represents a magnetic layer; and (6) represents an autogenous (or self-contained) layer.

Magnetic laminate product, of the type described in Example 1, was coated with a 20% solids content self-contained coating formulation using a laboratory Meyer bar coater to obtain a coatweight of between 4-8 g/m² self-contained coating on a dry weight basis. The composition of the self-contained coating was :

| Component | % weight (dry basis) |
|---|---|
| Silton AC/PC reactive pigment | 50 |
| Styrene-butadiene latex | 10 |
| CB microcapsules | 20 |
| Stilt starch | 20 |

The resulting autogenous product was used to form the lower part of a 2 part set with a standard 80g/m² bond paper as the upper sheet. When pressure was applied to the 2 part-set in the manner usually associated with the usage of self-contained forms, a clear and legible image was obtained on the self-contained surface.

The resulting autogenous product was also magnetically imaged (encoded) with a bar code using inductive magnetic writing equipment of the kind conventionally used for encoding the magnetic strips of credit cards. The resulting magnetic image was found to be readable using a magnetic loop reader or suitably configured oscilloscope. Magnetic image could be applied onto either the base side or coated side of the paper.

## Claims

1. A magnetically-activatable sheet product comprising a pair of laminated outer sheets (1) between which is a magnetic layer (3) comprising magnetically-activatable particles in a binder matrix, **characterised in that** the outer sheets (1) have sufficient opacity to mask the appearance of the magnetic layer (3), and at least one of the outer sheets (1) is provided with a pigment/binder primer coat (2) on its inward facing surface.

2. A magnetically-activatable sheet product as claimed in claim 1, wherein the outer sheets (1) are of paper.

3. A magnetically-activatable product as claimed in claim 2, wherein the outer sheets (1) are each of a lightweight base paper of weight 50 g m⁻² or less.

4. A magnetically-activatable sheet product as claimed in claim 1, wherein the outer sheets (1) are of plastic sheet material which simulates the properties of paper.

5. A magnetically-activatable product as claimed in any preceding claim, wherein the primer coat (2) is formulated from conventional coating pigments as used in the paper industry, for example calcium carbonate (particularly precipitated calcium carbonate), kaolin or other clays (particularly calcined clays) and/or titanium dioxide.

6. A magnetically-activatable product as claimed in claim 5, wherein the primer coatweight is in the range of from 5 to 15 g m⁻².

7. A magnetically-activatable product as claimed in any preceding claim, wherein the outer sheets (1) are substantially identical and each comprises a base sheet, a pigment/binder primer coat (2) and a magnetic coating (3) applied on top of the primer coat (2).

8. A magnetically-activatable product as claimed in any of claims 1 to 6 wherein each outer sheet (1) comprises a base sheet, and a pigment/binder primer coat (2) and wherein the magnetic layer (3) is formed by a magnetic coating applied on top of the primer coat (2) of one only of the outer sheets (1).

9. A magnetically activatable product as claimed in any of claims 1 to 6 wherein the magnetic layer (3) is formed by a laminating adhesive applied as or just before the two outer sheets (1) are brought together in a laminating press or similar equipment.

10. A method of storing digital magnetic data, which comprises writing digital data to a product according to any one of the preceding claims using a magnetic data writer.

11. A method of reading digital magnetic data, which comprises writing digital data to a product according to any one of claims 1 to 9 and subsequently reading said data using a magnetic data reader.

## Patentansprüche

1. Ein magnetisch aktivierbares Bogenprodukt umfassend ein Paar laminierter äußerer Bögen (1), zwischen denen sich eine magnetische Schicht (3) befindet, umfassend magnetisch aktivierbare Teilchen in einer Binder-Matrix, **dadurch gekennzeichnet, dass** die äußeren Bögen (1) ausreichend opak sind, um das Durchscheinen der magnetischen Schicht (3) abzudecken und mindestens einer der äußeren Bögen (1) mit einer Pigment/Binder-Primerbeschichtung (2) auf seiner nach innen gerichteten Oberfläche versehen ist.

2. Ein magnetisch aktivierbares Bogenprodukt gemäß Anspruch 1, wobei die äußeren Bögen (1) aus Papier sind.

3. Ein magnetisch aktivierbares Produkt gemäß Anspruch 2, wobei die äußeren Bögen (1) jeweils ein leichtgewichtiges Rohpapier mit einem Gewicht von 50 g m⁻² oder weniger ist.

4. Ein magnetisch aktivierbares Bogenprodukt gemäß Anspruch 1, wobei die äußeren Bögen (1) aus einem schichtförmigen Material aus Kunststoff sind, das die Eigenschaften von Papier nachbildet.

5. Ein magnetisch aktivierbares Produkt gemäß einem der vorhergehenden Ansprüche, wobei die Primerbeschichtung (2) aus üblichen Beschichtungspigmenten, wie sie in der Papierindustrie verwendet werden, zum Beispiel Calciumcarbonat (insbesondere gefälltes Calciumcarbonat), Kaolin- oder andere Tonerden (insbesondere kalzinierte Tonerden) und/oder Titandioxid, formuliert ist.

6. Ein magnetisch aktivierbares Produkt gemäß Anspruch 5, worin das Gewicht der Primerbeschichtung im Bereich von 5 bis 15 g m⁻² ist.

7. Ein magnetisch aktivierbares Produkt gemäß einem der vorhergehenden Anprüche, wobei die äußeren Bögen (1) im Wesentlichen identisch sind und jede eine Basisschicht, eine Pigment/Binder-Primer-Schicht (2) und eine magnetische Beschichtung (3), die auf die Oberseite der Primer-Schicht (2) aufgetragen ist, umfasst.

8. Ein magnetisch aktivierbares Produkt gemäß einem der Ansprüche 1 bis 6, wobei jeder äußere Bogen (1) eine Basisschicht und eine Pigment/Binder-Primer-Schicht (2) umfasst und wobei die magnetische Schicht (3) durch eine magnetische Beschichtung gebildet ist, die auf der Primer-Schicht (2) auf nur einem der äußeren Bögen (1) aufgetragenen ist.

9. Ein magnetisch aktivierbares Produkt gemäß einem der Ansprüche 1 bis 6, wobei die magnetische Schicht (3) durch ein laminierendes Adhäsiv, das gerade dann oder kurz bevor die beiden äußeren Schichten (1) in einer Laminierpresse oder einer ähnlichen Vorrichtung zusammengebracht wurden, gebildet ist.

10. Ein Verfahren zur Speicherung digitaler magnetischer Daten, das das Schreiben der digitalen Daten auf einem Produkt gemäß einem der vorhergehenden Ansprüche unter Verwendung eines magnetischen Datenschreibers umfasst.

11. Ein Verfahren zum Lesen digitaler magnetischer Daten, das das Schreiben digitaler Daten auf einem Produkt gemäß einem der Ansprüche 1 bis 9 und anschließend das Lesen dieser Daten unter Verwendung eines magnetischen Datenlesers umfasst.

## Revendications

1. Produit en feuille pouvant être activé magnétiquement comprenant une paire de feuilles externes stratifiées (1) entre lesquelles se trouve une couche magnétique (3) comprenant des particules pouvant être activées magnétiquement dans une matrice de liant, **caractérisé en ce que** les feuilles externes (1) ont une opacité suffisante pour masquer l'apparence de la couche magnétique (3), et au moins l'une des feuilles externes (1) est pourvue d'une couche primaire de pigment/liant (2) sur sa surface tournée vers l'intérieur.

2. Produit en feuille pouvant être activé magnétiquement selon la revendication 1, dans lequel les feuilles externes (2) sont en papier.

3. Produit pouvant être activé magnétiquement selon la revendication 2, dans lequel les feuilles externes (1) sont chacune en papier de base léger de 50 g m⁻² de grammage ou moins.

4. Produit en feuille pouvant être activé magnétiquement selon la revendication 1, dans lequel les feuilles externes (1) sont en matière plastique de feuille qui simule les propriétés du papier.

5. Produit pouvant être activé magnétiquement selon l'une quelconque des revendications précédentes, dans lequel la couche primaire (2) est formulée à partir de pigments de revêtement classiques tels qu'utilisés dans l'industrie du papier, par exemple du carbonate de calcium (en particulier du carbonate de calcium précipité), du kaolin ou d'autres argiles (en particulier des argiles calcinées) et/ou du dioxyde de titane.

6. Produit pouvant être activé magnétiquement selon la revendication 5, dans lequel le grammage de la couche primaire est dans la gamme de 5 à 15 g m⁻².

7. Produit pouvant être activé magnétiquement selon l'une quelconque des revendications précédentes, dans lequel les feuilles externes (1) sont sensiblement identiques et comprennent chacune une feuille de base, une couche primaire de pigment/liant (2) et un revêtement magnétique (3) appliqué au-dessus de la couche primaire (2).

8. Produit pouvant être activé magnétiquement selon l'une quelconque des revendications 1 à 6, dans lequel chaque feuille (1) comprend une feuille de base, et une couche primaire de pigment/liant (2) et dans lequel la couche magnétique (3) est formée par un revêtement magnétique appliqué au-dessus de la couche primaire (2) d'une seule des feuilles externes (1).

9. Produit pouvant être activé magnétiquement selon l'une quelconque des revendications 1 à 6, dans lequel la couche magnétique (3) est formée par un adhésif de stratification appliqué lorsque les deux feuilles externes (1) sont rassemblées ou juste avant qu'elles ne le soient dans une presse de stratification ou un équipement similaire.

10. Procédé de stockage de données magnétiques numériques, qui comprend l'écriture de données numériques sur un produit selon l'une quelconque des revendications précédentes, en utilisant un scripteur de données magnétiques.

11. Procédé de lecture de données magnétiques numériques, qui comprend l'écriture de données magnétiques sur un produit selon l'une quelconque des revendications 1 à 9, et la lecture ultérieure desdites données en utilisant un lecteur de données magnétiques.
